# EUROPEAN PATENT APPLICATION

(11) **EP 2 534 979 A1**
(43) Date of publication of application: **19.12.2012**
(21) Application number: 12171781.3
(22) Date of filing: 13.06.2012
(51) Int. Cl.: A47C 7/30, B60N 2/70

(54) **Suspension structure of seat cushion**

(30) Priority: 15.06.2011 JP 2011133219
(71) Applicant: Nhk Spring Co., Ltd., Kanazawa-ku Yokohama-shi Kanagawa 236-0004 (JP); Suzuki Co., Ltd., Shizuoka-ken 432-8611 (JP)
(72) Inventor: Mori, Hideo, Aichi-ken, 471-0071 (JP); Kitabayashi, Kenichi, Aichi-ken, 471-0071 (JP); Mizoo, Akihiko, Shizuoka-ken, 432-8611 (JP)
(74) Representative: Prechtel, Jörg

(57) **Abstract**

An object of the present invention is to provide a suspension structure with a substantial two-dimensional extension and a method of manufacturing such a suspension structure using metal wires in a non-flat condition not by injection molding in an integral manner, but by assembling a plurality of parts.

There is provided a suspension structure (10) used in a seat cushion for a vehicle comprising a plurality of suspension wires (12,14,16,18) each of which extends so as to range between front and rear portions of the seat cushion, a plurality of connection bars (24, 26) each of which engages said plurality of suspension wires(12,14,16,18), a clip (28) which engages one of said plurality of suspension wires (12,14,16,18) with one of said plurality of connection bars(24,26), and a plurality of plastic links (30) each of which connects said plurality of connection bars(24,26).

## Description

### FIELD OF THE INVENTION

The present invention relates to a suspension structure which is an inner structure of a seating portion of a seat for a vehicle such as an automobile and a method of manufacturing said suspension structure.

### BACKGROUND OF THE INVENTION

Conventionally, in a seating portion of a seat for a vehicle such as an automobile, a plurality of metal wires each of which was typically formed into wave patterns to include a two-dimensional extension were provided between front and rear seat frames, in order to support a weight of a passenger while at the same time to possess a suitable flexibility so as to offer the passenger a good seated feeling.

Since a stiffness sufficient to support the weight of the passenger and a suitable flexibility so as to exhibit a comfortableness, which oppose each other, are required for such metal wires, they are usually made of a spring steel bar with a diameter of a few millimeters including a suitable flexibility. Such a spring steel bar is bent into rectangular or S-shaped patterns, but thereafter, it is annealed so as to remove residual stress in order to stably maintain such a formed shape.

However, since a value of a residual stress generated due to the bending process differs at portions of the steel wire, even if the heating and the cooling of the entirety of the steel wire is uniformly conducted, an effect for removing the residual stress differs at portions of the steel wire. As a result, the steel wire after it is annealed does not form a flat surface. In other words, if the steel wire is placed on a flat ground, the steel wire as a whole does not uniformly contact the ground, so that some portions of the steel wire contacting the ground and some portions thereof lifting off the ground can be caused.

The steel wire that has been formed in the above way is generally placed inside a mold for injection molding and formed using plastic material by injection molding to manufacture the suspension structure for the cushion. The steel wire having been formed by injection molding recovers its plain condition by the fact that it is formed integral with the plastic resin. As a result, the suspension structure can be obtained by the plurality of steel wires and the plastic members connecting these wires.

However, it was technically difficult to appropriately insert the metal wire with a non-flat surface after the annealing process into a mold with a substantially flat surface upon injection molding. For instance, even if the metal wire is once pressed against the mold by hand, the metal wire is returned to its original non-flat shape when the hand is off the metal wire, as a cause of a spring-like property of the steel wire, the mold cannot be closed. In addition, even if the metal wire is made to be in conformation with the mold by utilizing a suitable tool along with the mold, it is impossible to prepare such a tool which can be applied to any metal wire, since an amount by which the metal wire deviates from the flat surface differs depending on which part of which metal wire is selected.

The injection molding of such an article is generally difficult, so that, although veteran engineers in industrially developed countries can appropriately carry out such an injection molding in a short period of time, in developing countries where there are many engineers with poor technical skills, it is almost impossible to do so.

Further, such a mold for injection molding includes a complicated expensive structure.

Still further, it is necessary to adjust the material and/or the diameter of the metal wire in order to that the elastic property of the metal wire is adaptable to the region where automobiles are used, for instance, resulting in a shape of a part of the mold which forms resin having to be changed. In view of the fact that such a modification of the mold is also difficult, a new mold for injection molding has to be created.

Due to the above circumstances, the suspension structure becomes expensive, which leads to the increase of the cost of the entire seat.

### SUMMARY OF THE INVENTION

The object of the present invention is to provide a suspension structure with a substantial two-dimensional extension and a method of manufacturing such a suspension structure using metal wires in a non-flat condition not by injection molding in an integral manner, but by assembling a plurality of parts.

Therefore, the suspension structure used for the seat cushion for the vehicle according to one embodiment of the present invention includes a plurality of suspension wires which extend so as to cover a two-dimensional area between front and rear portions of the seat cushion, a plurality of connection bars engaged by the plurality of suspension wires, a clip engaging one of the plurality of suspension wires with one of the plurality of connection bars, and a plurality of plastic links connecting the plurality of connection bars.

In one embodiment of the suspension structure of the present invention, the suspension structure is assembled by connecting suspension wires using the connection bars and the clip. The weight of the passenger is supported by the plurality of suspension wires each of which extends in a two-dimensional manner between the front and rear portions of the seat cushion. The plurality of suspension wires are engaged by the plurality of connection bars via the clips to define a cushion surface. The connection bars are connected to each other via the plastic links, so that the entire structure can be strengthened.

According to this embodiment, since the suspension structure can be manufactured without adopting injection molding, so that the complicated and thus, expensive molding for injection molding is not required, whereby the manufacturing cost can be reduced.

In another embodiment of the suspension structure of the present invention, each of the suspension wires is formed by bending a substantially straight metal wire into rectangular patterns, and two of the suspension wires form a pair to be arranged in such a way that their rectangular patterns are in an mirror image relationship, and the plurality of pairs are disposed in the widthwise direction of the seat.

According to this embodiment, the suspension wires are bent in rectangular patterns, More specifically, each of the suspension wires is constituted by straight sections each of which is oriented to the longitudinal direction of the vehicle and straight sections each of which is oriented to the lateral direction of the vehicle which is perpendicular the longitudinal direction in an alternate manner. Thus, the suspension wires can be connected to each other by attaching the connection bar to the suspension wires along the straight sections and locking the connection bar against to the suspension wires via the clips.

As a result, undesired deformation of the suspension wires due to the bending thereof can be effectively corrected. In addition, the suspension structure over the entire cushion surface can be obtained by arranging the plurality of pairs of the suspension wires formed to be substantially flat along the widthwise direction of the seat cushion.

In another embodiment of the suspension structure of the present invention, the connection bars are arranged in the widthwise direction relative to the longitudinal direction of the vehicle.

According to this embodiment, the connection bars arranged in the widthwise direction can correct the non-straight deformation of the widthwise sections arranged along the direction perpendicular to the longitudinal direction of the vehicle of the suspension wires formed into rectangular patterns in such a way that the widthwise sections can be straightened.

As a result, the widthwise shape of the seat can be particularly flattened. Therefore, in a case where the weight of the passenger is shifted in the widthwise direction of the vehicle due to the fact that the vehicle runs along a curved road, the comfortableness of the seat can be improved.

In another embodiment of the suspension structure of the present invention, the connection bars are arranged in the longitudinal direction of the vehicle.

According to this embodiment, the connection bars arranged in the longitudinal direction can correct the non-straight deformation of the longitudinal sections arranged along the longitudinal direction of the vehicle of the suspension wires formed into rectangular patterns in such a way that the longitudinal sections can be straightened.

As a result, the longitudinal shape of the seat can be particularly flattened. Therefore, in a case where the weight of the passenger is shifted in the longitudinal direction of the vehicle due to repetitions of the run and the stop of the vehicle, the comfortableness of the seat can be improved.

In another embodiment of the suspension structure of the present invention, at least either of a wire harness of the vehicle, an electrical connector of the vehicle, or a sensor of the vehicle is mounted on the plastic link.

According to this embodiment, since electrical elements such as a wire harness, an electrical connector, and a sensor provided inside the seat can be attached to the plastic link provided between the connection bars, these elements can be prevented from being damaged due to the contacting of these elements with other members in the seat such as the suspension wires, or the connection bars, whereby the reliability of the electrical system of the vehicle can be enhanced.

According to the present invention, the suspension structure cheaper than that manufactured by the conventional technique can be obtained. More specifically, the suspension structure can be readily manufactured by assembling predetermined parts, instead of forming the suspension wires, which already have been deformed due to the annealing process, along with the plastic material in the mold for injection molding in an integral manner. Therefore, the suspension structure can be manufactured even in developing countries where wage is low.

### BRIEF DESCRIPTION OF THE DRAWINGS

Fig.1 is a plain view showing an upper side of a suspension structure of the first embodiment of the present invention.
Fig.2(A) is a side view showing the suspension structure in Fig.1.
Fig.2(B) is a side view showing a side plate by which the suspension structure in Fig.1 is fixed on a floor of a vehicle.
Fig. 3 is an enlarged cross sectional view taken along a line 3-3 in Fig.1.
Fig.4 is a perspective view showing a situation in which the suspension structure in Fig.1 is fixed on a floor of a vehicle.
Fig.5 is a plain view showing an upper side of a suspension structure of the second embodiment of the present invention.

### DETAILED DESCRIPTION OF EMBODIMENTS OF THE INVENTION

A first embodiment of the suspension structure of the present invention will be described in detail with reference to the drawings.

The following suspension structure is applied to a seat cushion of a vehicle as an example.

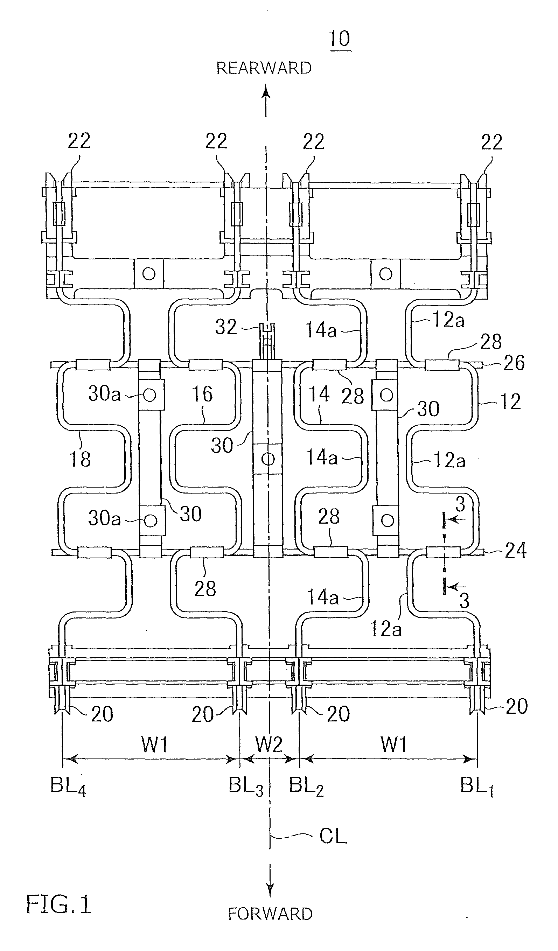

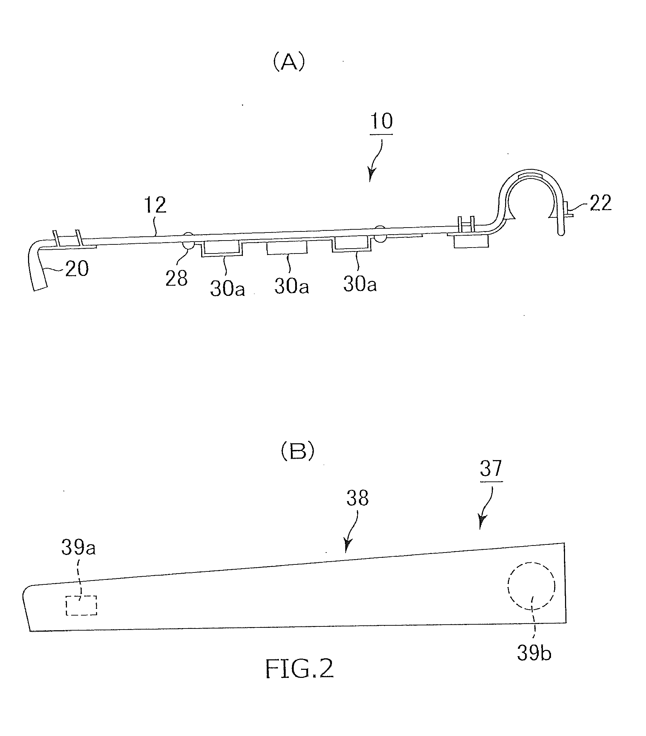

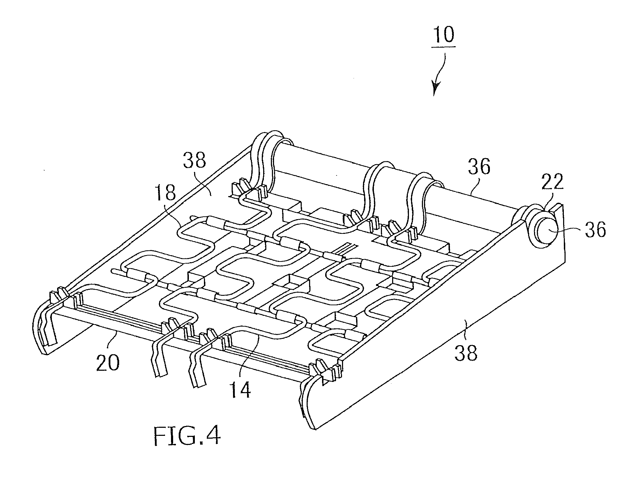

In Figs. 1, 2 and 4, a suspension structure of a first embodiment of the present invention is shown. In each of these figures, the downward and the upward directions indicate the front and the rear directions of the vehicle, respectively. A suspension wire 12 is arranged so as to be laid along a base line BL1 between a front frame 20 of the suspension structure 10 and a rear frame 22 formed into a reverse U-shape, and a plurality of rectangular bent portions 12a are provided at a substantially central portion in the longitudinal direction so as to form rectangular patterns oriented toward inside of the seat from the base line BL1.This allows the plurality of rectangular bent portions 12a to be arranged along the longitudinal direction of the seat, whereby a portion of a support for the weight of the passenger can be defined between the front and the rear frames 20, 22 of the seat.

In this embodiment, the suspension structure 10 includes a suspension wire 14 which has the same structure as the suspension wire 12. More specifically, the suspension wire 14 is arranged so as to be laid along a base line BL2 between the front frame 20 of the suspension structure 10 and the rear frame 22 and a plurality of rectangular bent portions 14a are provided at a substantially central portion in the longitudinal direction so as to form rectangular patterns oriented toward the side of the seat from the base line BL2.This allows the plurality of rectangular bent portions 14a to be arranged along the longitudinal direction of the seat, whereby a portion of a support for the weight of the passenger can be defined between the front and the rear frames 20, 22 of the seat.

The suspension wire 12 and the suspension wire 14 form a first pair in such a way that their rectangular patterns are arranged to constitute an mirror image relationship. More specifically, a good half of the weight of the passenger seated on the seat is supported in such a way that a thigh portion of his left leg is situated in the width w1 of the suspension structure10. In addition, the suspension wires 16, 18 constituted by the same manner as the suspension wires 12, 14 form a second pair to support a thigh portion of his right leg. The first pair of the suspension wires 12, 14 and the second pair of the suspension wires 16, 18 are arranged in a symmetrical manner with respect to the central line CL of the seat in such a way that the first pair is disposed at the right side, while the second pair is disposed at the left side. In this connection, W1 is preferably between 150mm and 200 mm, more preferably, 180mm, while W2 is preferably between 80mm and 100 mm, more preferably, 100mm.

In a case where these suspension wires 12,14,16,18 are bent so as to form the rectangular patterns, as compared with the other shape formed by the conventional technique such as S-shape, a residual stress inside the straight portion of the rectangular bent portion 12a and that inside the corner portion of the rectangular bent portion 12a largely differs from each other. Such being the case, the suspension wires 12,14,16,18 are annealed in accordance with a predetermined temperature pattern after it is bent so as to form the rectangular bent portion 12a. The suspension wires 12,14,16,18 are made of steel such as SWB or SWC, so that the residual stress is made substantially uniform after the annealing process. However, each of the annealed suspension wires is deformed in such a way that some of the bent corner portions lift off and some lift downwardly, whereby it tends to deviate from a single plane as a whole.

As shown in Figs. 1, 2 and 4, the suspension structure of the first embodiment includes a plurality of connection bars 24,26 each of which extends in the widthwise direction of the vehicle. The connection bar 24 is located at the front portion of the seat, while the connection bar 26 is located at the rear portion of the seat. Both of the connection bars 24,26 are arranged along the sections of the rectangular patterns of the suspension wires 12, 14,16, 18, each of which sections is bent so as to be oriented in the lateral direction relative to the seat of the vehicle, and below the suspension wires 12, 14,16, 18, and these connection bars 24,26 are connected to the suspension wires via connecting clips 28 which is described in detail below.

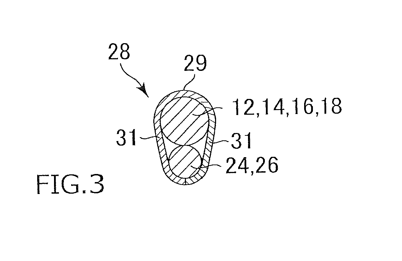

Now, the connecting clip 28 is explained about with reference to Figs.1 and 3. Fig.3 is an enlarged cross sectional view taken along a line 3-3 in Fig.1. The connecting clip 28 in this embodiment is made of metal such as spring steel, or stainless steel and formed into a substantial H-shape. The connecting clip 28 includes a base portion 29 and four leg portions 31 each of which extends from the base portion 29. The four leg portions 31 forms two pairs. In each of the two pairs, one of the leg portions 31 extends in the direction opposite to the direction in which the other of the leg portions 31 extends. For instance, the base portion 29 is disposed above and along the suspension wire 12, and each of the four leg portions 31 is deformed downwardly so as to caulk the suspension wire 12 and the corresponding connection bar 24 below the suspension wire 12 altogether. More specifically, as shown in Fig.3, the leg portions 31 forming a pair are deformed in such a way that the lower ends of the leg portions 31 contact each other below the connection bar 24.This allows the connection bar 24 to be firmly fixed on the suspension wire 12 while it is being kept aligned along the direction in which the suspension wire 12 extends.

With reference to Figs.1,2 and 4 again, the suspension structure 10 of this embodiment includes a plurality of plastic links 30 each of which extends between the connection bars 24, 26 and is made of resin such as polypropylene or polyoxymethylene. Each of the plastic links 30 includes a connection portion 30a connected to a mat surface ( not shown) of the cushion. Each of the plastic links 30 is in a belt form and since it has a width larger than a diameter of each of the suspension wires 12,14,16,18, it can support a substantial portion of the weight of the passenger transmitted through his thigh. In this connection, each of the plastic links 30 may be formed integral with the connection bars 24,26 by injection molding, or the connection bars 24,26 may be penetrated into holes formed at the plastic links 30. The central plastic link among three plastic links 30 arranged along the longitudinal direction of the vehicle includes an extension portion 32 extending rearwardly to an end portion of which at least either of a wire harness, an electric connector, or a sensor may be attached. Therefore, these electric elements can be prevented from being damaged due to the contact thereof with other members in the seat such as the suspension wire or the connection bars, whereby the reliability of the electric system of the vehicle can be enhanced.

The suspension structure 10 constituted by the above members is mounted on a frame structure 37 which can be slid in the longitudinal direction of the vehicle via a conventional slide mechanism ( not shown) attached on the floor surface FL of the vehicle through a conventional bracket leg( not shown). More specifically, the frame structure 37 includes a pair of side plates 38 which extend in the longitudinal direction of the vehicle and are spaced away from each other in the widthwise direction, a front frame 39a which connects inner surfaces of the pair of side plates 38 at the front portion of the vehicle, and a rear frame 39b which connects inner surfaces of the pair of side plates 38 at the rear portion of the vehicle, so that it constitutes a rectangular frame as a whole. The suspension structure 10 is mounted on the frame structure 37 in such a way that the rear frame 22 of each of the suspension wires constituting a curved portion at the rear portion of the vehicle and the front frame 20 of each of the suspension wires constituting a bent portion at the front portion of the vehicle rest on the rear frame 39b and the front frame 39a, respectively.

A method of manufacturing the present suspension structure used in the seat cushion for the vehicle comprises a step of preparing a plurality of suspension wires each of which includes a flexibility sufficient to substantially support the weight of the passenger while at the same time to offer the passenger a comfortableness, a step of providing a plurality of connection bars connected to the plurality of suspension wires, and a step of providing a plurality of clips each connecting the suspension wire and the connection bar, and the plastic link extends between the plurality of connection bars.

In one embodiment of the method of manufacturing the present suspension structure, the step of preparing the suspension wires includes a step of bending the metal wire into rectangular patterns, and a step of annealing the bent metal wire.

In this method of manufacturing the present suspension structure, since the metal wire is bent into the rectangular patterns, as compared with a case where another shape such as S-shape is formed, the residual stress inside the straight portion of the rectangular pattern and that inside the corner portion thereof largely differs from each other. Such being the case, the residual stress inside the suspension wire can be uniformed by the annealing process, whereby the rectangular patterns can be stably maintained.

However, the suspension wire that has been annealed in the above way tends to deform in such a way that the bent corner portions lift off or lift downwardly, so that it deviates from a single plane as a whole. Accordingly, as explained in the paragraph of the prior art, it is almost impossible to manufacture the integral suspension structure by inserting such an annealed suspension wire into the conventional mold for injection molding.

Therefore, in another embodiment of the method of manufacturing the present suspension structure, the annealed suspension wire can constitute a flat surface as a whole when it is assembled with the connection bars via the clips.

In this embodiment, the suspension wire is bent into rectangular patterns. More specifically, the suspension wire is constituted by the straight short sections each of which is oriented in the longitudinal direction and the straight short sections each of which is oriented in the lateral direction perpendicular to the longitudinal direction in an alternate manner. Therefore, the connection bar can be closely attached to the suspension wires along the straight sections, and thus, can be locked against the suspension wires via the clips.

In another embodiment of the method of manufacturing the present suspension structure, the method includes a step of forming a pair of the suspension wires in such a way that their rectangular patterns is in a mirror image relationship, and a step of arranging a plurality of pairs of the suspension wires in the widthwise direction of the seat.

According to this embodiment of the method, the deformation of the suspension wires can be generated in a symmetrical manner due to the mirror image relationship of the rectangular patterns, so that undesired deformation of the suspension wires can be effectively corrected by means of the connection bar. In addition, the suspension structure over the entire surface of the cushion can be obtained by arranging the plurality of pairs of the suspension wires in the widthwise direction of the seat.

In another embodiment of the method of the present invention, the step of providing the connection bars includes a step of providing the connection bars arranged in the widthwise direction relative to the longitudinal direction of the vehicle.

According to this embodiment, the connection bars arranged in the widthwise direction can correct the non-straight deformation of the widthwise sections arranged along the direction perpendicular to the longitudinal direction of the vehicle of the suspension wire formed into rectangular patterns in such a way that the widthwise sections can be straightened.

As a result, the widthwise shape of the seat can be particularly flattened. Therefore, in a case where the weight of the passenger is shifted in the widthwise direction of the vehicle due to the fact that the vehicle runs along a curved road, the comfortableness of the seat can be improved.

In another embodiment of the method of the present invention, the step of providing the connection bars includes a step of providing the connection bars in the longitudinal direction of the vehicle.

According to this embodiment, the connection bars arranged in the longitudinal direction can correct the non-straight deformation of the longitudinal sections arranged along the longitudinal direction of the vehicle of the suspension wire formed into rectangular patterns in such a way that the longitudinal sections can be straightened.

As a result, the longitudinal shape of the seat can be particularly flattened. Therefore, in a case where the weight of the passenger is shifted in the longitudinal direction of the vehicle due to repetitions of the run and the stop of the vehicle, the comfortableness of the seat can be improved.

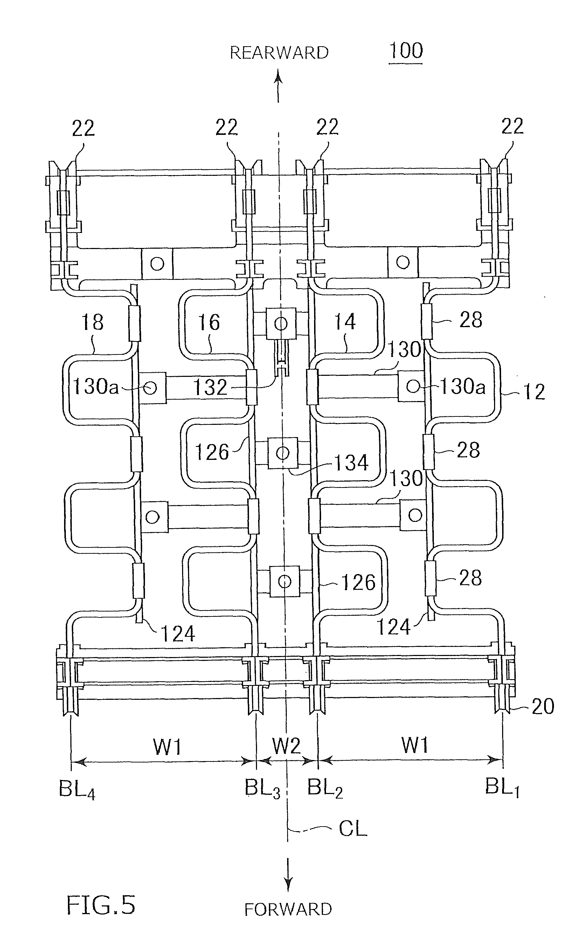

A second embodiment of a suspension structure 100 of the present invention will be described with reference to Fig.5. In the following description, with respect to the same elements as those in the first embodiment, an explanation thereabout is omitted by attaching the same reference numbers to those elements, and the technical feature of this embodiment will be described in detail.

With respect to the main difference between the first and second embodiments, in the suspension structure 10 of the first embodiment, the connection bars 24, 26 are disposed in the lateral direction of the seat, whereas, in the suspension structure 100 of the second embodiment, the first connection bars 124,124 and the second connection bars 126, 126 are disposed in the longitudinal direction of the seat. More specifically, the first connection bars 124,124 are connected to the straight sections of the rectangular patterns formed inside the seat from the base lines BL1, BL4 of the suspension wires 12, 18 via three connecting clips 28, respectively. In addition, the second connection bars 126,126 are connected to the straight sections which are arranged along the base lines BL2, BL3 of the suspension wires 14, 16 along the base lines BL2, BL3 via two connecting clips 28, respectively.

As shown in Fig.5, the suspension structure 100 of the second embodiment includes plastic links 130 each of which is positioned between first and second connection bars 124,126. More specifically, the plastic links 130 are spaced apart from each other and connected to the connection bars 124,126, respectively. The plastic links 130 are arranged in a symmetrical manner with respect the CL. In addition, three plastic links 134 with being spaced apart from each other are positioned at the substantial central portion of the seat between the two second connection bars 126, one of which is disposed along the base line BL2, the other of which is disposed along the base line BL3. The plastic link 134 at the rearmost position of the seat is provided with an extension 132 which forwardly extends. At least either of the wire harness, the electrical connector, or the sensor is mounted on the end portion of the extension 132.

As described above, the preferred embodiments of the present invention were described in detail, however, it is evident that those skilled in the art could modify or change the embodiments in various manners without departing from the scope of the present invention.

The present invention can be applicable not only to the seat for the automobile, but also to the seat for a train, or an airplane. In addition, the suspension structure of the present invention can be applicable to a seat back of the seat.

An object of the present invention is to provide a suspension structure with a substantial two-dimensional extension and a method of manufacturing such a suspension structure using metal wires in a non-flat condition not by injection molding in an integral manner, but by assembling a plurality of parts.

There is provided a suspension structure (10) used in a seat cushion for a vehicle comprising a plurality of suspension wires (12,14,16,18) each of which extends so as to range between front and rear portions of the seat cushion, a plurality of connection bars (24, 26) each of which engages said plurality of suspension wires(12,14,16,18), a clip (28) which engages one of said plurality of suspension wires (12,14,16,18) with one of said plurality of connection bars(24,26), and a plurality of plastic links (30) each of which connects said plurality of connection bars(24,26).

## Claims

1. A suspension structure (10) used in a seat cushion for a vehicle comprising a plurality of suspension wires (12,14,16,18) each of which extends so as to range between front and rear portions of the seat cushion, a plurality of connection bars (24, 26) each of which engages said plurality of suspension wires(12,14,16,18), a clip (28) which engages one of said plurality of suspension wires (12,14,16,18) with one of said plurality of connection bars(24,26), and a plurality of plastic links (30) each of which connects said plurality of connection bars(24,26).

2. The suspension structure (10) according to claim 1, wherein each of said suspension wires (12,14,16,18) is formed by bending a substantially straight metal wire into rectangular patterns, two of said suspension wires (12,14,16,18) forms a pair so as to be arranged in such a way that their rectangular patterns are in a mirror image relationship, and a plurality of pairs of said suspension wires (12,14,16,18) are disposed along the widthwise direction of the seat cushion.

3. The suspension structure (10) according to claim 1 or 2, wherein said connection bars (24, 26) are disposed along the widthwise direction of the vehicle.

4. The suspension structure (10) according to claim 1 or 2, wherein said connection bars (24, 26) are disposed along the longitudinal direction of the vehicle.

5. The suspension structure (10) according to any of claims 1 to 4, wherein at least either of a wire harness, an electrical connector, or a sensor, for the vehicle, is attached to said plastic link (30).
